# EUROPEAN PATENT APPLICATION

(11) **EP 4 361 100 A1**
(43) Date of publication of application: **01.05.2024**
(21) Application number: 23207001.1
(22) Date of filing: 31.10.2023
(51) Int. Cl.: C01B 32/168, C01B 33/40, C01B 33/158

(54) **AN AEROGEL COMPOSITE**

(30) Priority: 31.10.2022 SG 10202251555V
(71) Applicant: JHH Investment Pte Ltd, 628818 Singapore (SG)
(72) Inventor: FOO, George, 628818 Singapore (SG); YANG, Ling, 628818 Singapore (SG); DAI, Jinzhou, Shenzhen (CN)
(74) Representative: Marks & Clerk LLP

(57) **Abstract**

There is provided an aerogel composite comprising an aerogel, and a complex comprising carbon fibers (CF), carbon nanotubes (CNT) and a swelling clay. There is also provided a method of forming the aerogel composite.

## Description

### Technical Field

The present invention relates to an aerogel composite and a method of forming the same.

### Background

Aerogels have three-dimensional nanoporous structures, high porosity, large specific surface area, low thermal conductivity, and excellent thermal and fire insulation performance, which makes it an ideal substitute for traditional thermal insulation materials. However, existing aerogels have very limited use due to poor strength performance, high brittleness, and ease of cracking, as well as defects attributed to huge surface tension of the aerogel material during the drying process.

Conventional aerogel composites seek to enhance the mechanical properties of aerogels. Strength enhancers have been used to form aerogel composites, but such enhancers face the problem of easy aggregation, leading to poor compatibility and interface between the materials, which adversely affects the overall performance of the composite.

There is therefore a need for an improved aerogel composite.

### Summary of the invention

The present invention seeks to address these problems, and/or to provide an improved aerogel composite.

According to a first aspect, the present invention provides an aerogel composite comprising: an aerogel; and a complex comprising carbon fibers (CF), carbon nanotubes (CNT) and a swelling clay.

According to a particular aspect, the aerogel composite may further comprise a nano-stabiliser.

The aerogel composite may comprise 55-65 parts of the aerogel by weight. According to a particular aspect, the aerogel composite may comprise 15-25 parts of the complex by weight. According to a particular aspect, the composite may comprise 1-4 parts of the nano-stabiliser by weight.

According to a particular aspect, the CF and CNT may form a CF/CNT hybrid.

The aerogel composite may have several improved properties. For example, the aerogel composite may have a thermal conductivity of 0.01-0.03 W/mK. According to a particular aspect, the aerogel composite may have a flexural strength of ≥ 3.0 MPa. According to a particular aspect, the aerogel composite may have a tensile strength of ≥ 1.20 MPa at 50% elongation.

According to a second aspect of the present invention, there is provided a method of forming the aerogel composite described above, the method comprising:
(a) mixing an aerogel with a complex comprising carbon fibers (CF), carbon nanotubes (CNT), and a swelling clay in a solvent; and
(b) drying to form the aerogel composite.

According to a particular aspect, the method may further comprise forming the complex prior to the mixing.

In particular, the forming the complex may comprise:
- mixing CF and CNT in a solution comprising an acid and a surfactant;
- drying to form the CF/CNT hybrid;
- mixing the CF/CNT hybrid with the swelling clay in a solution comprising a dispersing agent; and
- drying to form the complex.

According to a particular aspect, the method may further comprise heat treating the swelling clay prior to the mixing in (a).

According to a particular aspect, the mixing in (a) may further comprise mixing a nano-stabiliser. According to a particular aspect, the method may further comprise calcinating the nano-stabliser prior to the mixing a nano-stabliser. According to a particular aspect, the calcinating may comprise sequentially calcinating at a first predetermined temperature for a first predetermined time, followed by a second predetermined temperature for a second predetermined time, followed by a third predetermined temperature for a third predetermined time. According to a particular aspect, the method may further comprise ultrasonicating the nano-stabliser following the calcinating and prior to the mixing the nano-stabliser.

According to a particular aspect, the mixing in (a) may further comprise mixing an interface modifier.

### Detailed Description

In general terms, the present invention relates to an improved aerogel composite. In particular, the aerogel composite of the present invention has a very low thermal conductivity, high flexural strength, and high tensile strength at 50% elongation. The aerogel composite of the present invention may also demonstrate high acid resistance. Therefore, the aerogel composite may be used in a variety of applications such as, but not limited to, heat insulation and building materials.

According to a first aspect, there is provided an aerogel composite comprising: an aerogel; a complex comprising carbon fibers (CF), carbon nanotubes (CNT) and a swelling clay.

The aerogel may be any suitable aerogel for the purposes of the present invention. According to a particular aspect, the aerogel may be a hydrophobic aerogel. For example, the aerogel may be a silica aerogel, a carbon aerogel, a metal oxide aerogel, a graphene-based aerogel, a chalcogen aerogel, or a mixture thereof. In particular, the aerogel may be a silica aerogel. Even more in particular, the aerogel may be a silica aerogel which is hydrophobic.

According to a particular aspect, the aerogel may have a porosity of more than 60%. In particular, the aerogel may have a porosity of 30-70%, 35-65%, 40-60%, or 45-55%. Even more in particular, the aerogel may have a porosity of 45-55%. According to a particular aspect, the aerogel may have a thermal conductivity of 0.025-0.033 W/mK, 0.026-0.032 W/mK, 0.027-0.031 W/mK, or 0.028-0.030 W/mK. Even more in particular, the aerogel may have a thermal conductivity of 0.028-0.03 W/mK.

The CF may have an average diameter of 2-5 nm. The CF advantageously enhances the strength of the aerogel.

The CNT may be any suitable CNT. For example, the CNT may comprise single-wall carbon nanotubes (SWCNTs), multi-wall carbon nanotubes (MWCNTs), or a combination thereof. Due to the high surface area of CNT, the addition of CNT to CF greatly improves the dispersion of CF and prevents agglomeration, thereby improving the compatibility of the aerogel and the CF, resulting in an improved composite with improved thermal insulation and strength.

According to a particular aspect, the CF and CNT may form a CF/CNT hybrid. The hybridization of the CF with CNT may advantageously improve the interface of the CF.

According to a particular aspect, the CF/CNT hybrid may comprise CF and CNT in a weight ratio of 1:4, 1:5, 1:6, or 1:7.

The swelling clay may be any suitable swelling clay. The swelling clay may be defined as expansive clay minerals exhibiting shrink-swell behaviour. Such behaviour may be due to dispersed layer silicates. For example, the clay minerals may be 2:1 clay minerals formed by bonding of two tetrahedral sheets and one octahedral sheet, which results in ion substitution in the layers and a negative charge on the surface to attract water or hydrated cations, thereby allowing the clay minerals to shrink and swell.

According to a particular aspect, the swelling clay may comprise smectite, nontronite, bentonite, chlorite, montmorillonite, beidellite, attapulgite, illite, vermiculite, or a combination thereof. In particular, the swelling clay may comprise bentonite. Advantageously, the swelling clay exhibits superior barrier performance due to its layered sheet structure, which optimizes the insulation effect of the composite when interspersed with the CF and CNT within the complex.

According to a particular aspect, the CF/CNT hybrid may form the complex with the swelling clay. For example, the CF/CNT hybrid may form a CF/CNT-bentonite complex.

According to a particular aspect, the aerogel composite may further comprise a nano-stabiliser. A nano-stabiliser may be defined as any suitable material with dimensions in the nanoscale that enhances the stability of the composite. For example, the nano-stabiliser may advantageously prevent the insulation and mechanical properties of the composite from significantly deteriorating under acidic conditions. According to a particular aspect, the nano-stabiliser may have an average particle size of 1-100 nm, 10-90 nm, 20-80 nm, 30-70 nm, or 40-60 nm. In particular, the nano-stabiliser may have an average particle size of 20-80 nm. According to a particular aspect, the nano-stabiliser may be, but not limited to, nano magnesium oxide. The addition of a nano-stabiliser leads to a synergistic effect with the aerogel and complex, and advantageously enhances the insulation and mechanical properties of the composite, and at the same time, has a significant improvement effect on the stability performance of the product, especially in an acidic environment.

According to a particular aspect, the aerogel composite may comprise 50-70 parts of the aerogel by weight. In particular, the aerogel composite may comprise 50-60 parts, 60-70 parts, or 55-65 parts of the aerogel by weight. Even more in particular, the aerogel composite may comprise 55-65 parts of the aerogel by weight. For example, the aerogel composite may comprise 60 parts of the aerogel by weight.

According to a particular aspect, the aerogel composite may comprise 15-25 parts of the complex by weight. In particular, the aerogel composite may comprise 15-25 parts, 16-24 parts, 17-23 parts, 18-22 parts, or 19-20 parts of the complex by weight. Even more in particular, the aerogel composite may comprise 20 parts of the complex by weight.

According to a particular aspect, the aerogel composite may comprise 1-5 parts of the nano-stabiliser by weight. In particular, the aerogel composite may comprise 1-5 parts, 1.5-4.5 parts, 2-4 parts, or 2.5-3.5 parts of the nano-stabiliser by weight. Even more in particular, the aerogel composite may comprise 1 part, 2.5 parts, or 4 parts of the nano-stabiliser by weight.

According to a particular aspect, the aerogel composite may have a thermal conductivity of 0.01-0.03 W/mK. In particular, the aerogel composite may have a thermal conductivity of 0.0101-0.0290 W/mK, 0.0102-0.0280 W/mK, 0.0103-0.0270 W/mK, 0.0104-0.0260 W/mK, 0.0105-0.0250 W/mK, 0.0106-0.0240 W/mK, 0.0107-0.0230 W/mK, 0.0108-0.0220 W/mK, 0.0109-0.0210 W/mK, 0.0110-0.0200 W/mK, 0.0120-0.0190 W/mK, 0.0130-0.0180 W/mK, 0.0140-0.0170 W/mK, or 0.0150-0.0160 W/mK. Even more in particular, the aerogel composite may have a thermal conductivity of 0.0101-0.0110 W/mK.

According to a particular aspect, the aerogel composite may have a flexural strength of ≥ 2.0 MPa. As will be known by those skilled in the art, flexural strength is defined as the stress in a material just before it yields in a flexure test. According to a particular aspect, the aerogel composite may have a flexural strength of ≥ 2.1 MPa, ≥ 2.2 MPa, ≥ 2.3 MPa, ≥ 2.4 MPa, ≥ 2.5 MPa, ≥ 2.6 MPa, ≥ 2.7 MPa, ≥ 2.8 MPa, ≥ 2.9 MPa, ≥ 3.0 MPa, ≥ 3.1 MPa, ≥ 3.2 MPa, ≥ 3.3 MPa. Even more in particular, the aerogel composite may have a flexural strength of ≥ 3.0 MPa.

According to a particular aspect, the aerogel composite may have a tensile strength of ≥ 0.25 MPa at 50% elongation. Tensile strength at 50% elongation may be defined as the tensile strength of the composite after it has been elongated by 50% from its original length. According to a particular aspect, the aerogel composite may have a tensile strength at 50% elongation of ≥ 0.25 MPa, ≥ 0.50 MPa, ≥ 0.75 MPa, ≥ 1.00 MPa, ≥ 1.25 MPa, ≥ 1.50 MPa, ≥ 1.75 MPa, or ≥ 2.00 MPa. Even more in particular, the aerogel composite may have a tensile strength of ≥ 1.20 MPa at 50% elongation.

According to a second aspect, there is provided a method of forming the aerogel composite above, the method comprising:
(a) mixing an aerogel with a complex comprising carbon fibers (CF), carbon nanotubes (CNT), and a swelling clay in a solvent; and
(b) drying to form the aerogel composite.

The aerogel may be any suitable aerogel as described above.

The solvent may be any suitable solvent for the purposes of the present invention. According to a particular aspect, the solvent may comprise an alcohol. For example, the solvent may comprise a monohydric alcohol. In particular, the solvent may comprise methanol, ethanol, propan-2-ol, butan-1-ol, pentan-1-ol, hexadecan-1-ol, or a combination thereof. Even more in particular, the solvent may comprise ethanol.

The mixing may comprise mixing a suitable amount of solvent into the mixture of aerogel and complex. For example, the mixing may comprise mixing 60-70 parts of the solvent by weight based on the total weight of the mixture. In particular, the mixing may comprise mixing 60 parts, 65 parts, or 70 parts of the solvent by weight based on the total weight of the mixture.

The drying may be at any suitable temperature. According to a particular aspect, the drying may be at a temperature of 50-70 °C. In particular, the drying may be at a temperature of 50-70 °C, or 55-65 °C. Even more in particular, the drying may be at a temperature of 55-65 °C.

The drying may be for any suitable amount of time. For example, the drying may be for 2-4 hours. In particular, the drying may be for 2-3 hours.

The drying may be by any suitable means. For example, the drying may be under ambient pressure.

According to a particular aspect, the mixing may comprise mixing 50-70 parts of the aerogel by weight based on the total weight of the mixture. In particular, the mixing may comprise mixing 50-60 parts, 60-70 parts, or 55-65 parts of the aerogel by weight based on the total weight of the mixture. Even more in particular, the mixing may comprise mixing 55-65 parts of the aerogel by weight based on the total weight of the mixture. Even more in particular, the mixing may comprise mixing 60 parts of the aerogel by weight based on the total weight of the mixture.

According to a particular aspect, the mixing may comprise mixing 15-25 parts of the complex by weight based on the total weight of the mixture. In particular, the mixing may comprise mixing 15-25 parts, 16-24 parts, 17-23 parts, 18-22 parts, or 19-20 parts of the complex by weight based on the total weight of the mixture. Even more in particular, the mixing may comprise mixing 20 parts of the complex by weight based on the total weight of the mixture.

The mixing may further comprise mixing an adhesive. The adhesive may be any suitable adhesive. For example, the adhesive may be, but not limited to, a phenolic resin adhesive. The mixing an adhesive may comprise mixing 5-15 parts, 6-14 parts, 7-13 parts, 8-12 parts, or 9-11 parts of the adhesive by weight based on the total weight of the mixture. In particular, the mixing may comprise mixing 8-14 parts of the adhesive by weight based on the total weight of the mixture.

According to a particular aspect, the method may comprise molding prior to the drying. The molding may be any suitable type of molding process. For example, the molding may be, but not limited to, press molding. The molding may be at any suitable pressure and/or for any suitable amount of time. For example, the molding may be at a pressure of 1-2 MPa. The molding may be for 20-30 minutes.

According to a particular aspect, the method may further comprise forming the complex prior to the mixing. The forming the complex prior to the mixing may comprise:
- mixing CNT in a solution comprising an acid and a surfactant with CF;
- drying to form the CF/CNT hybrid;
- mixing the CF/CNT hybrid with the swelling clay in a solution comprising a dispersing agent; and
- drying to form the complex.

The acid may be any suitable acid. For example, the acid may comprise, but is not limited to, hydrochloric acid, hydrobromic acid, hydroiodic acid, nitric acid, sulphuric acid, or a mixture thereof. In particular, the acid may be hydrochloric acid.

The surfactant may be any suitable surfactant. According to a particular aspect, the surfactant may comprise a quaternary ammonium cation, a salt thereof, or any combination thereof. In particular, the surfactant may comprise, but is not limited to, cetyltrimethylammonium bromide, cetyltrimethylammonium chloride, sodium dodecyl benzene sulfonate (SDBS), sodium dodecyl sulfonate (SDS), Triton X-100, or a mixture thereof. Even more in particular, the surfactant may comprise cetyltrimethylammonium bromide (CTAB). According to a particular aspect, the surfactant may further comprise chitosan. The combination of the acid and surfactant provides an active matrix and advantageously improves the surface activity of the CNT and promotes the formation of the CF/CNT hybrid.

According to a particular aspect, the method may further comprise forming a CNT solution prior to the mixing the CNT in a solution comprising an acid and a surfactant with CF. In particular, the forming may comprise stirring CNT with the acid and the surfactant. The stirring may be at a suitable speed. For example, the stirring speed may be 300 revolutions/min, 325 revolutions/min, 350 revolutions/min, 375 revolutions/min, 400 revolutions/min, 425 revolutions/min, 450 revolutions/min, 475 revolutions/min, or 500 revolutions/min. The stirring may be for a suitable period of time. For example, the stirring may be for 15-30 minutes, 15-20 minutes, 20-25 minutes, or 25-30 minutes. The amount of CNT in the solution may be 10-20 parts by weight based on the total weight of the mixture. The amount of acid in the solution may be 35-45 parts by weight based on the total weight of the mixture. The amount of surfactant in the solution may be 3-7 parts by weight based on the total weight of the mixture.

The mixing the CNT in a solution comprising an acid and a surfactant with CF may be at any suitable weight ratio. According to a particular aspect, the weight ratio of CF:CNT solution may be 1:5. The mixing may be at a speed of 400 revolutions/min, 425 revolutions/min, 450 revolutions/min, 475 revolutions/min, or 500 revolutions/min. The mixing may be at a temperature of 60-80 °C. In particular, the mixing may be at a temperature of 60-80 °C, or 65-75 °C. The mixing may be for 40-60 minutes. In particular, the mixing may be for 45-55 minutes.

The dispersing agent may be any suitable agent to facilitate dispersion of the swelling clay and prevent settling or clumping, so as to improve the miscibility of the CF/CNT hybrid with the swelling clay. According to a particular aspect, the dispersing agent may be, but not limited to, an algin or a salt thereof. For example, the dispersing agent may be, but not limited to, sodium alginate, potassium alginate, or calcium alginate. In particular, the dispersing agent may be sodium alginate. According to a particular aspect, the dispersing agent may be in an amount of 5-9 times the amount of the CF/CNT hybrid.

According to a particular aspect, the forming the complex may further comprise ultrasonication following the mixing and prior to the drying. According to a particular aspect, the ultrasonication may be at a power of 500-1000 W. In particular, the ultrasonication may be at a power of 550-950 W, 600-900 W, 650-850 W, or 700-800W. Even more in particular, the ultrasonication may be at a power of 650-750 W. For example, the ultrasonication may be at a power of 650 W, 700 W, or 750 W.

According to a particular aspect, the ultrasonication may be for 10-50 minutes. In particular, the ultrasonication may be for 10-50 minutes, 15-45 minutes, 20-40 minutes, or 25-35 minutes. Even more in particular, the ultrasonication may be for 25-35 minutes. For example, the ultrasonication may be for 25 minutes, 30 minutes, or 35 minutes.

According to a particular aspect, the method may further comprise heat treating the swelling clay prior to the mixing in (a), i.e., the mixing an aerogel with a complex comprising carbon fibers (CF), carbon nanotubes (CNT), and a swelling clay in a solvent. According to a particular aspect, the heat treating of the swelling clay may be at any suitable temperature. In particular, the heat treating of the swelling clay may be at a temperature of 215-225 °C. For example, the heat treating of the swelling clay may be at a temperature of 215 °C, 220 °C, or 225 °C.

According to a particular aspect, the heat treating of the swelling clay may be for any suitable time. In particular, the heat treating may be for 40-50 minutes. Even more in particular, the heat treating may be for 40 minutes, 45 minutes, or 50 minutes. According to a particular aspect, the method may further comprise cooling down the swelling clay to room temperature at a rate of 1-3 °C following the heat treating of the swelling clay.

Heat treating of the swelling clay leads to sheet spacing expansion, which facilitates improved interspersing of the swelling clay with the CF/CNT hybrid, thereby advantageously enhancing the thermal insulation properties of the composite formed. Further, the heat treating of the swelling clay enhances toughness of the composite formed.

According to a particular aspect, the mixing an aerogel with a complex comprising carbon fibers (CF), carbon nanotubes (CNT), and a swelling clay in a solvent may further comprise mixing a nano-stabiliser. The nano-stabiliser may have a suitable size. For example, the average particle size of the nano-stabiliser may be 1-100 nm, 10-90 nm, 20-80 nm, 30-70 nm, or 40-60 nm. In particular, the average particle size of the nano-stabiliser may be 30-70 nm.

According to a particular aspect, the mixing may comprise mixing 1-5 parts of the nano-stabiliser by weight based on the total weight of the mixture. In particular, the mixing may comprise mixing 1-5 parts, 1.5-4.5 parts, 2-4 parts, or 2.5-3.5 parts of the nano-stabiliser by weight based on the total weight of the mixture. Even more in particular, the mixing may comprise mixing 1 part, 2.5 parts, or 4 parts of the nano-stabiliser by weight based on the total weight of the mixture.

According to a particular aspect, the nano-stabiliser may be nano magnesium oxide. According to a particular aspect, the mixing may comprise mixing 1-5 parts of the nano-stabiliser by weight based on the total weight of the mixture. In particular, the aerogel composite may comprise 1-5 parts, 1.5-4.5 parts, 2-4 parts, or 2.5-3.5 parts of the nano-stabiliser by weight based on the total weight of the mixture. Even more in particular, the aerogel composite may comprise 2.5 parts of the nano-stabiliser by weight based on the total weight of the mixture.

According to a particular aspect, the method may further comprise calcinating the nano-stabliser prior to the mixing a nano-stabliser. The calcinating may be at any suitable temperature. For example, the calcinating may be at a temperature of 350-550 °C. In particular, the calcinating may be at a temperature of 375-525 °C, 400-500 °C, or 425-475 °C.

According to a particular aspect, the calcinating may comprise sequentially calcinating at a first predetermined temperature for a first predetermined time, followed by a second predetermined temperature for a second predetermined time, followed by a third predetermined temperature for a third predetermined time. For example, the first predetermined temperature may be 350-450 °C.The second predetermined temperature may be 400-550 °C. In particular, the second predetermined temperature may be reached by ramping up from the first predetermined temperature at a rate of 3-6 °C/min. The third predetermined temperature may be 200-350 °C. In particular, the third predetermined temperature may be reached by ramping down from the second predetermined temperature at a rate of 2-4 °C/min.

The first predetermined time may be 1-2 hours. The second predetermined time may be 15-60 minutes. The third predetermined time may be 5-20 minutes.

The sequential calcinating of the nano-stabiliser advantageously leads to significant improvement of the thermal insulation and mechanical properties of the composite.

According to a particular aspect, the method may further comprise ultrasonicating the nano-stabliser following the calcinating and prior to the mixing the nano-stabliser. For example, the ultrasonicating may be at a power of 300-500 W. In particular, the ultrasonicating may be at a power of 300-500 W, 325-475 W, 350-450 W, or 375-425 W. Even more in particular, the ultrasonicating may be at a power of 300 W, 400 W, or 500 W.

The ultrasonicating may be for 5-30 minutes. In particular, the ultrasonicating may be for 5-30 minutes, 10-25 minutes, or 15-20 minutes. Even more in particular, the ultrasonicating may be for 10 minutes, 15 minutes, or 20 minutes.

The ultrasonication may be carried out in any suitable medium for dispersion. For example, the ultrasonication may be carried out in deionised water. According to a particular aspect, the amount of deionised water may be 5-9 times the amount of nano-stabiliser by weight. In particular, the amount of deionised water may be 5 times, 7 time, or 9 times the amount of nano-stabiliser by weight.

The ultrasonication leads to better dispersion of the nano stabiliser within the composite, thereby enhancing the effects of the nano stabiliser and leading to improved mechanical properties of the composite.

According to a particular aspect, the mixing an aerogel with a complex comprising carbon fibers (CF), carbon nanotubes (CNT), and a swelling clay in a solvent may further comprise mixing an interface modifier. An interface modifier may be defined as any suitable material which enhances the interfacial bonding between the aerogel and the complex, thereby improving the strength and thermal insulation performance of the composite. The interface modifier may comprise a silane coupling agent, a rare-earth element, or a combination thereof. For example, the interface modifier may comprise a silane coupling agent, which may be any silane-containing coupling agent for promoting adhesion at organic/inorganic interfaces. The interface modifier may also comprise a rare-earth element with dual organic/inorganic functionalities, thus enhancing the bonding between the inorganic groups in the aerogel and the organic groups in the complex.

In particular, the silane coupling agent may be, but not limited to, trimethoxysilane, triethoxysilane, 3-(trimethoxysilyl)propyl methacrylate, or a combination thereof. Even more in particular, the silane coupling agent may be 3-(trimethoxysilyl)propyl methacrylate. The rare-earth element may be comprised in a metal, and oxide, a salt, or any combination thereof. In particular, the rare-earth element may be, but not limited to, a lanthanide, scandium, yttrium, or any combination thereof in a solution. Even more in particular, the rare-earth element may be comprised in a lanthanum chloride solution.

According to a particular aspect, the mixing an interface modifier may comprise mixing 1-5 parts of the interface modifier by weight based on the total weight of the mixture. In particular, the mixing an interface modifier may comprise mixing 1-5 parts, 1.5-4.5 parts, 2-4 parts, or 2.5-3.5 parts of the interface modifier by weight based on the total weight of the mixture. Even more in particular, the mixing an interface modifier may comprise mixing 1 part, 3 parts, or 5 parts of the interface modifier by weight based on the total weight of the mixture.

The method may further comprise forming the interface modifier prior to the mixing the interface modifier. For example, the forming the interface modifier may comprise mixing a silane coupling agent and a solution comprising a rare-earth metal. The silane coupling agent and the rare-earth metal may be as described above.

According to a particular aspect, the forming the interface modifier may comprise dispersing 5-10 parts by weight of the silane coupling agent in 10-15 parts by weight of a suitable solvent, and mixing 1-3 parts by weight of the solution comprising a rare-earth metal based on the total weight of the mixture. For example, the solvent may comprise an alcohol. In particular, the solvent may be ethanol.

The forming the interface modifier may further comprise stirring at a speed of 500-700 revolutions/min. In particular, the stirring may be at a speed of 500 revolutions/min, 600 revolutions/min, or 700 revolutions/min.

The stirring may be for 10-60 minutes, 15-55 minutes, 20-50 minutes, 25-45 minutes, or 30-40 minutes. In particular, the stirring may be for 30-40 minutes. Even more in particular, the stirring may be for 30 minutes, 35 minutes, or 40 minutes.

Whilst the foregoing description has described exemplary embodiments, it will be understood by those skilled in the technology concerned that many variations may be made without departing from the present invention.

Having now generally described the invention, the same will be more readily understood through reference to the following examples which are provided by way of illustration, and are not intended to be limiting.

### Examples

### Example 1

10 parts by weight of carbon nanotubes (CNT) were first added to 35 parts by weight of hydrochloric acid (HCl) solution (5% w/w), based on the total weight of the mixture, and dispersed evenly. Thereafter, 3 parts by weight of chitosan and 0.2 parts by weight of cetyltrimethylammonium bromide (CTAB) were added, based on the total weight of the mixture, and the solution stirred at a speed of 300 revolutions/min for 20-30 minutes to obtain a CNT solution. Carbon fiber (CF) was added to the CNT solution in a weight ratio of 1:5, stirred at a speed of 400 revolutions/min and temperature of 65 °C, for 45 minutes. The mixture was then washed with water, then dried, to obtain a CF/CNT hybrid.

Bentonite was heat-treated at 215 °C for 40-50 min, and cooled at a rate of 1 °C/s to room temperature. The heat-treated bentonite and CF/CNT hybrid were mixed in a weight ratio of 2:5, and sodium alginate (10% w/w) was added in an amount of 5 times of the CF/CNT hybrid. The mixture was ultrasonicated at 650 W for 20 minutes, then washed with water, then dried, to obtain CF/CNT-bentonite complex.

5 parts by weight of silane coupling agent KH570 was added to 10 parts by weight of ethanol solvent, based on the total weight of the mixture, and dispersed evenly. Thereafter, 1 part by weight of lanthanum chloride solution (3% w/w) based on the total weight of the mixture was added. The solution was stirred at a speed of 500 revolutions/min for 30 minutes, to obtain an interface modifier.

Nano magnesium oxide (MgO) was thermally calcined in a three-step program: (i) at 410 °C for 1 hour, (ii) thereafter the temperature was increased to 500 °C at a rate of 3 °C / s, and maintained for 30 minutes, and (iii) the temperature was decreased to 300 °C at a rate of 2 °C / s, and maintained for 10-20 minutes, before cooling to room temperature with water. The calcined nano MgO was sonicated in deionized water at 300 W for 10 minutes. The amount of deionised water used was 5 times the amount of nano MgO by weight. Subsequently, the dispersion was filtered and dried to obtain a nano MgO stabiliser.

Silicon dioxide aerogel with a porosity greater than 60% was used as the base for the aerogel composite. 55 parts by weight of the silicon dioxide aerogel, 15 parts by weight of CF/CNT-bentonite complex, 8 parts by weight of phenolic resin adhesive, 1 part by weight of interface modifier, 1 part by weight of nano MgO, and 60 parts by weight of ethanol solvent, based on the total weight of the mixture, were mixed, then press moulded at a moulding pressure of 1-2 MPa for 20-30 minutes, and thereafter, dried at 55-65 °C for 2-3 hours, to obtain the aerogel composite.

### Example 2

20 parts by weight of carbon nanotubes (CNT) were first added to 45 parts by weight of HCl solution (10% w/w), based on the total weight of the mixture, and dispersed evenly. Thereafter, 6 parts by weight of chitosan and 0.6 parts by weight of CTAB were added, based on the total weight of the mixture, and the solution stirred at a speed of 350 revolutions/min for 30 minutes to obtain a CNT solution. Carbon fiber (CF) was added to the CNT solution in a weight ratio of 1:5, stirred at a speed of 500 revolutions/min and temperature of 75 °C, for 55 minutes. The mixture was then washed with water, then dried, to obtain a CF/CNT hybrid.

Bentonite was heat-treated at 225 °C for 50 min, and cooled at a rate of 3 °C/s to room temperature. The heat-treated bentonite and CF/CNT hybrid were mixed in a weight ratio of 2:5, and sodium alginate (15% w/w) was added in an amount of 9 times of the CF/CNT hybrid. The mixture was ultrasonicated at 750 W for 30 minutes, then washed with water, then dried, to obtain CF/CNT-bentonite complex.

10 parts by weight of silane coupling agent KH570 was added to 15 parts by weight of ethanol solvent, based on the total weight of the mixture, and dispersed evenly. Thereafter, 3 parts by weight of lanthanum chloride solution (6% w/w) based on the total weight of the mixture was added. The solution was stirred at a speed of 700 revolutions/min for 40 minutes, to obtain an interface modifier.

Nano magnesium oxide (MgO) was thermally calcined in a three-step program: (i) at 430 °C for 2 hours, (ii) thereafter the temperature was increased to 500-550 °C at a rate of 6 °C / s, and maintained for 30-40 minutes, and (iii) the temperature was decreased to 300-350 °C at a rate of 2-4 °C / s, and maintained for 10-20 minutes, before cooling to room temperature with water. The calcined nano MgO was sonicated in deionized water at 500 W for 20 minutes. The amount of deionised water used was 9 times the amount of nano MgO by weight. Subsequently, the dispersion was filtered and dried to obtain a nano MgO stabiliser.

Silicon dioxide aerogel with a porosity of 45% was used as the base for the aerogel composite. 65 parts by weight of the silicon dioxide aerogel, 25 parts by weight of CF/CNT-bentonite complex, 14 parts by weight of phenolic resin adhesive, 5 parts by weight of interface modifier, 4 parts by weight of nano MgO, and 70 parts by weight of ethanol solvent, based on the total weight of the mixture, were mixed, then press moulded at a moulding pressure of 1-2 MPa for 20-30 minutes, and thereafter, dried at 55-65 °C for 2-3 hours, to obtain the aerogel composite.

### Example 3

15 parts by weight of carbon nanotubes (CNT) were first added to 40 parts by weight of HCl solution (7.5% w/w), based on the total weight of the mixture, and dispersed evenly. Thereafter, 4 parts by weight of chitosan and 0.4 parts by weight of CTAB were added, based on the total weight of the mixture, and the solution stirred at a speed of 325 revolutions/min for 25 minutes to obtain a CNT solution. Carbon fiber (CF) was added to the CNT solution in a weight ratio of 1:5, stirred at a speed of 400-500 revolutions/min and temperature of 70 °C, for 50 minutes. The mixture was then washed with water, then dried, to obtain a CF/CNT hybrid.

Bentonite was heat-treated at 220 °C for 45 min, and cooled at a rate of 2 °C/s to room temperature. The heat-treated bentonite and CF/CNT hybrid were mixed in a weight ratio of 2:5, and sodium alginate (12.5% w/w) was added in an amount of 5-9 times of the CF/CNT hybrid, based on the total weight of the mixture. The mixture was ultrasonicated at 700 W for 25 minutes, then washed with water, then dried, to obtain CF/CNT-bentonite complex.

7.5 parts by weight of silane coupling agent KH570 was added to 12.5 parts by weight of ethanol solvent, based on the total weight of the mixture, and dispersed evenly. Thereafter, 2 parts by weight of lanthanum chloride solution (4.5% w/w) was added, based on the total weight of the mixture. The solution was stirred at a speed of 600 revolutions/min for 35 minutes, to obtain an interface modifier.

Nano magnesium oxide (MgO) was thermally calcined in a three-step program: (i) at 420 °C for 1.5 hours, (ii) thereafter the temperature was increased to 525 °C at a rate of 4.5 °C / s, and maintained for 35 minutes, and (iii) the temperature was decreased to 325 °C at a rate of 3.5 °C / s, and maintained for 15 minutes, before cooling to room temperature with water. The calcined nano MgO was sonicated in deionized water at 400 W for 15 minutes. The amount of deionised water used was 7 times the amount of nano MgO by weight. Subsequently, the dispersion was filtered and dried to obtain a nano MgO stabiliser.

Silicon dioxide aerogel with a porosity greater than 60% was used as the base for the aerogel composite. 60 parts by weight of the silicon dioxide aerogel, 20 parts by weight of CF/CNT-bentonite complex, 11 parts by weight of phenolic resin adhesive, 3 parts by weight of interface modifier, 2.5 parts by weight of nano MgO, and 65 parts by weight of ethanol solvent were mixed, based on the total weight of the mixture, then press moulded at a moulding pressure of 1-2 MPa for 20-30 minutes, and thereafter, dried at 55-65 °C for 2-3 hours, to obtain the aerogel composite.

### Comparative Example 1

The parameters used in Comparative Example 1 were different from Example 3 in that CF/CNT-bentonite complex was not made and not added to the composite.

7.5 parts by weight of silane coupling agent KH570 was added to 12.5 parts by weight of ethanol solvent, based on the total weight of the mixture, and dispersed evenly. Thereafter, 2 parts by weight of lanthanum chloride solution (4.5% w/w) was added, based on the total weight of the mixture. The solution was stirred at a speed of 600 revolutions/min for 35 minutes, to obtain an interface modifier.

Nano magnesium oxide (MgO) was thermally calcined in a three-step program: (i) at 420 °C for 1.5 hours, (ii) thereafter the temperature was increased to 525 °C at a rate of 4.5 °C / s, and maintained for 35 minutes, and (iii) the temperature was decreased to 325 °C at a rate of 3.5 °C / s, and maintained for 15 minutes, before cooling to room temperature with water. The calcined nano MgO was sonicated in deionized water at 400 W for 15 minutes. The amount of deionised water used was 7 times the amount of nano MgO by weight. Subsequently, the dispersion was filtered and dried to obtain a nano MgO stabiliser.

Silicon dioxide aerogel with a porosity greater than 60% was used as the base for the aerogel composite. 60 parts by weight of the silicon dioxide aerogel, 11 parts by weight of phenolic resin adhesive, 3 parts by weight of interface modifier, 2.5 parts by weight of nano MgO, and 65 parts by weight of ethanol solvent were mixed, based on the total weight of the mixture, then press moulded at a moulding pressure of 1-2 MPa for 20-30 minutes, and thereafter, dried at 55-65 °C for 2-3 hours, to obtain the aerogel composite.

### Comparative Example 2

The parameters used in Comparative Example 2 were different from Example 3 in that CF/CNT-bentonite complex was not made, and was replaced with carbon fiber.

7.5 parts by weight of silane coupling agent KH570 was added to 12.5 parts by weight of ethanol solvent, based on the total weight of the mixture, and dispersed evenly. Thereafter, 2 parts by weight of lanthanum chloride solution (4.5% w/w) was added, based on the total weight of the mixture. The solution was stirred at a speed of 600 revolutions/min for 35 minutes, to obtain an interface modifier.

Nano magnesium oxide (MgO) was thermally calcined in a three-step program: (i) at 420 °C for 1.5 hours, (ii) thereafter the temperature was increased to 525 °C at a rate of 4.5 °C / s, and maintained for 35 minutes, and (iii) the temperature was decreased to 325 °C at a rate of 3.5 °C / s, and maintained for 15 minutes, before cooling to room temperature with water. The calcined nano MgO was sonicated in deionized water at 400 W for 15 minutes. The amount of deionised water used was 7 times the amount of nano MgO by weight. Subsequently, the dispersion was filtered and dried to obtain a nano MgO stabiliser.

Silicon dioxide aerogel with a porosity greater than 60% was used as the base for the aerogel composite. 60 parts by weight of the silicon dioxide aerogel, 5 parts by weight of CF, 11 parts by weight of phenolic resin adhesive, 3 parts by weight of interface modifier, 2.5 parts by weight of nano MgO, and 65 parts by weight of ethanol solvent were mixed, based on the total weight of the mixture, then press moulded at a moulding pressure of 1-2 MPa for 20-30 minutes, and thereafter, dried at 55-65 °C for 2-3 hours, to obtain the aerogel composite.

### Comparative Example 3

The parameters used in Comparative Example 3 were different from Example 3 in that CNT was not dispersed in a solution of HCl, chitosan, and CTAB, and instead mixed directly with CF and heat-treated bentonite to form the CF/CNT-bentonite complex.

Bentonite was first heat-treated at 220 °C for 45 min, and cooled at a rate of 2 °C/s to room temperature. The heat-treated bentonite, CF, and CNT were mixed in a weight ratio of 2:5:25, and sodium alginate (12.5% w/w) was added in an amount of 5-9 times of the mixture, based on the total weight of the mixture. The mixture was ultrasonicated at 700 W for 25 minutes, then washed with water, then dried, to obtain CF/CNT-bentonite complex.

7.5 parts by weight of silane coupling agent KH570 was added to 12.5 parts by weight of ethanol solvent, based on the total weight of the mixture, and dispersed evenly. Thereafter, 2 parts by weight of lanthanum chloride solution (4.5% w/w) was added, based on the total weight of the mixture. The solution was stirred at a speed of 600 revolutions/min for 35 minutes, to obtain an interface modifier.

Nano magnesium oxide (MgO) was thermally calcined in a three-step program: (i) at 420 °C for 1.5 hours, (ii) thereafter the temperature was increased to 525 °C at a rate of 4.5 °C / s, and maintained for 35 minutes, and (iii) the temperature was decreased to 325 °C at a rate of 3.5 °C / s, and maintained for 15 minutes, before cooling to room temperature with water. The calcined nano MgO was sonicated in deionized water at 400 W for 15 minutes. The amount of deionised water used was 7 times the amount of nano MgO by weight. Subsequently, the dispersion was filtered and dried to obtain a nano MgO stabiliser.

Silicon dioxide aerogel with a porosity greater than 60% was used as the base for the aerogel composite. 60 parts by weight of the silicon dioxide aerogel, 20 parts by weight of CF/CNT-bentonite complex, 11 parts by weight of phenolic resin adhesive, 3 parts by weight of interface modifier, 2.5 parts by weight of nano MgO, and 65 parts by weight of ethanol solvent were mixed, based on the total weight of the mixture, then press moulded at a moulding pressure of 1-2 MPa for 20-30 minutes, and thereafter, dried at 55-65 °C for 2-3 hours, to obtain the aerogel composite.

### Comparative Example 4

The parameters used in Comparative Example 4 were different from Example 3 in that CNT was replaced with graphene to form a CF/graphene-bentonite complex.

15 parts by weight of graphene were first added to 40 parts by weight of HCl solution (7.5% w/w), based on the total weight of the mixture, and dispersed evenly. Thereafter, 4 parts by weight of chitosan and 0.4 parts by weight of CTAB were added, based on the total weight of the mixture, and the solution stirred at a speed of 325 revolutions/min for 25 minutes to obtain a graphene solution. Carbon fiber (CF) was added to the graphene solution in a weight ratio of 1:5, stirred at a speed of 400-500 revolutions/min and temperature of 70 °C, for 50 minutes. The mixture was then washed with water, then dried, to obtain a CF/graphene hybrid.

Bentonite was heat-treated at 220 °C for 45 min, and cooled at a rate of 2 °C/s to room temperature. The heat-treated bentonite and CF/graphene hybrid were mixed in a weight ratio of 2:5, and sodium alginate (12.5% w/w) was added in an amount of 5-9 times of the CF/graphene hybrid, based on the total weight of the mixture. The mixture was ultrasonicated at 700 W for 25 minutes, then washed with water, then dried, to obtain CF/graphene-bentonite complex.

7.5 parts by weight of silane coupling agent KH570 was added to 12.5 parts by weight of ethanol solvent, based on the total weight of the mixture, and dispersed evenly. Thereafter, 2 parts by weight of lanthanum chloride solution (4.5% w/w) was added, based on the total weight of the mixture. The solution was stirred at a speed of 600 revolutions/min for 35 minutes, to obtain an interface modifier.

Nano magnesium oxide (MgO) was thermally calcined in a three-step program: (i) at 420 °C for 1.5 hours, (ii) thereafter the temperature was increased to 525 °C at a rate of 4.5 °C / s, and maintained for 35 minutes, and (iii) the temperature was decreased to 325 °C at a rate of 3.5 °C / s, and maintained for 15 minutes, before cooling to room temperature with water. The calcined nano MgO was sonicated in deionized water at 400 W for 15 minutes. The amount of deionised water used was 7 times the amount of nano MgO by weight. Subsequently, the dispersion was filtered and dried to obtain a nano MgO stabiliser.

Silicon dioxide aerogel with a porosity greater than 60% was used as the base for the aerogel composite. 60 parts by weight of the silicon dioxide aerogel, 20 parts by weight of CF/graphene-bentonite complex, 11 parts by weight of phenolic resin adhesive, 3 parts by weight of interface modifier, 2.5 parts by weight of nano MgO, and 65 parts by weight of ethanol solvent were mixed, based on the total weight of the mixture, then press moulded at a moulding pressure of 1-2 MPa for 20-30 minutes, and thereafter, dried at 55-65 °C for 2-3 hours, to obtain the aerogel composite.

### Comparative Example 5

The parameters used in Comparative Example 5 were different from Example 3 in that the CF/CNT-bentonite complex was prepared differently.

15 parts by weight of carbon nanotubes (CNT) and 5 parts by weight of bentonite, 30-40 parts by weight of HCl solution (10% w/w), 4-5 parts by weight of sodium alginate (12.5% w/w), and 3-6 parts by weight of CF, based on the total weight of the mixture, were mixed, washed with water, then dried, to obtain the CF/CNT-bentonite complex.

7.5 parts by weight of silane coupling agent KH570 was added to 12.5 parts by weight of ethanol solvent, based on the total weight of the mixture, and dispersed evenly. Thereafter, 2 parts by weight of lanthanum chloride solution (4.5% w/w), based on the total weight of the mixture, was added. The solution was stirred at a speed of 600 revolutions/min for 35 minutes, to obtain an interface modifier.

Nano magnesium oxide (MgO) was thermally calcined in a three-step program: (i) at 420 °C for 1.5 hours, (ii) thereafter the temperature was increased to 525 °C at a rate of 4.5 °C / s, and maintained for 35 minutes, and (iii) the temperature was decreased to 325 °C at a rate of 3.5 °C / s, and maintained for 15 minutes, before cooling to room temperature with water. The calcined nano MgO was sonicated in deionized water at 400 W for 15 minutes. The amount of deionised water used was 7 times the amount of nano MgO by weight. Subsequently, the dispersion was filtered and dried to obtain a nano MgO stabiliser.

Silicon dioxide aerogel with a porosity greater than 60% was used as the base for the aerogel composite. 60 parts by weight of the silicon dioxide aerogel, 20 parts by weight of CF/CNT-bentonite complex, 11 parts by weight of phenolic resin adhesive, 3 parts by weight of interface modifier, 2.5 parts by weight of nano MgO, and 65 parts by weight of ethanol solvent were mixed, based on the total weight of the mixture, then press moulded at a moulding pressure of 1-2 MPa for 20-30 minutes, and thereafter, dried at 55-65 °C for 2-3 hours, to obtain the aerogel composite.

### Comparative Example 6

The parameters used in Comparative Example 6 were different from Example 3 in that chitosan and CTAB were not added to the CNT solution, and ethanol was used instead.

10-20 parts by weight of carbon nanotubes (CNT) were mixed with 30-40 parts by weight of ethanol (98% w/w), and 3-5 parts by weight of HCl solution (7.5% w/w), based on the total weight of the mixture. The solution was stirred at a speed of 325 revolutions/min for 25 minutes to obtain a CNT solution. Carbon fiber (CF) was added to the CNT solution in a weight ratio of 1:5, stirred at a speed of 400-500 revolutions/min and temperature of 70 °C, for 50 minutes. The mixture was then washed with water, then dried, to obtain a CF/CNT hybrid.

Bentonite was heat-treated at 220 °C for 45 min, and cooled at a rate of 2 °C/s to room temperature. The heat-treated bentonite and CF/CNT hybrid were mixed in a weight ratio of 2:5, and sodium alginate (12.5% w/w) was added in an amount of 5-9 times of the CF/CNT hybrid, based on the total weight of the mixture. The mixture was ultrasonicated at 700 W for 25 minutes, then washed with water, then dried, to obtain CF/CNT-bentonite complex.

7.5 parts by weight of silane coupling agent KH570 was added to 12.5 parts by weight of ethanol solvent, based on the total weight of the mixture, and dispersed evenly. Thereafter, 2 parts by weight of lanthanum chloride solution (4.5% w/w), based on the total weight of the mixture, was added. The solution was stirred at a speed of 600 revolutions/min for 35 minutes, to obtain an interface modifier.

Nano magnesium oxide (MgO) was thermally calcined in a three-step program: (i) at 420 °C for 1.5 hours, (ii) thereafter the temperature was increased to 525 °C at a rate of 4.5 °C / s, and maintained for 35 minutes, and (iii) the temperature was decreased to 325 °C at a rate of 3.5 °C / s, and maintained for 15 minutes, before cooling to room temperature with water. The calcined nano MgO was sonicated in deionized water at 400 W for 15 minutes. The amount of deionised water used was 7 times the amount of nano MgO by weight. Subsequently, the dispersion was filtered and dried to obtain a nano MgO stabiliser.

Silicon dioxide aerogel with a porosity greater than 60% was used as the base for the aerogel composite. 60 parts by weight of the silicon dioxide aerogel, 20 parts by weight of CF/CNT-bentonite complex, 11 parts by weight of phenolic resin adhesive, 3 parts by weight of interface modifier, 2.5 parts by weight of nano MgO, and 65 parts by weight of ethanol solvent were mixed, based on the total weight of the mixture, then press moulded at a moulding pressure of 1-2 MPa for 20-30 minutes, and thereafter, dried at 55-65 °C for 2-3 hours, to obtain the aerogel composite.

### Comparative Example 7

The parameters used in Comparative Example 7 were different from Example 3 in that an interface modifier was not added.

15 parts by weight of carbon nanotubes (CNT) were first added to 40 parts by weight of HCl solution (7.5% w/w), based on the total weight of the mixture, and dispersed evenly. Thereafter, 4 parts by weight of chitosan and 0.4 parts by weight of CTAB were added, based on the total weight of the mixture, and the solution stirred at a speed of 325 revolutions/min for 25 minutes to obtain a CNT solution. Carbon fiber (CF) was added to the CNT solution in a weight ratio of 1:5, stirred at a speed of 400-500 revolutions/min and temperature of 70 °C, for 50 minutes. The mixture was then washed with water, then dried, to obtain a CF/CNT hybrid.

Bentonite was heat-treated at 220 °C for 45 min, and cooled at a rate of 2 °C/s to room temperature. The heat-treated bentonite and CF/CNT hybrid were mixed in a weight ratio of 2:5, and sodium alginate (12.5% w/w) was added in an amount of 5-9 times of the CF/CNT hybrid, based on the total weight of the mixture. The mixture was ultrasonicated at 700 W for 25 minutes, then washed with water, then dried, to obtain CF/CNT-bentonite complex.

Nano magnesium oxide (MgO) was thermally calcined in a three-step program: (i) at 420 °C for 1.5 hours, (ii) thereafter the temperature was increased to 525 °C at a rate of 4.5 °C / s, and maintained for 35 minutes, and (iii) the temperature was decreased to 325 °C at a rate of 3.5 °C / s, and maintained for 15 minutes, before cooling to room temperature with water. The calcined nano MgO was sonicated in deionized water at 400 W for 15 minutes. The amount of deionised water used was 7 times the amount of nano MgO by weight. Subsequently, the dispersion was filtered and dried to obtain a nano MgO stabiliser.

Silicon dioxide aerogel with a porosity greater than 60% was used as the base for the aerogel composite. 60 parts by weight of the silicon dioxide aerogel, 20 parts by weight of CF/CNT-bentonite complex, 11 parts by weight of phenolic resin adhesive, 2.5 parts by weight of nano MgO, and 65 parts by weight of ethanol solvent were mixed, based on the total weight of the mixture, then press moulded at a moulding pressure of 1-2 MPa for 20-30 minutes, and thereafter, dried at 55-65 °C for 2-3 hours, to obtain the aerogel composite.

### Comparative Example 8

The parameters used in Comparative Example 8 were different from Example 3 in that nano MgO was not added.

15 parts by weight of carbon nanotubes (CNT) were first added to 40 parts by weight of HCl solution (7.5% w/w), based on the total weight of the mixture, and dispersed evenly. Thereafter, 4 parts by weight of chitosan and 0.4 parts by weight of CTAB were added, based on the total weight of the mixture, and the solution stirred at a speed of 325 revolutions/min for 25 minutes to obtain a CNT solution. Carbon fiber (CF) was added to the CNT solution in a weight ratio of 1:5, stirred at a speed of 400-500 revolutions/min and temperature of 70 °C, for 50 minutes. The mixture was then washed with water, then dried, to obtain a CF/CNT hybrid.

Bentonite was heat-treated at 220 °C for 45 min, and cooled at a rate of 2 °C/s to room temperature. The heat-treated bentonite and CF/CNT hybrid were mixed in a weight ratio of 2:5, and sodium alginate (12.5% w/w) was added in an amount of 5-9 times of the CF/CNT hybrid, based on the total weight of the mixture. The mixture was ultrasonicated at 700 W for 25 minutes, then washed with water, then dried, to obtain CF/CNT-bentonite complex.

7.5 parts by weight of silane coupling agent KH570 was added to 12.5 parts by weight of ethanol solvent, based on the total weight of the mixture, and dispersed evenly. Thereafter, 2 parts by weight of lanthanum chloride solution (4.5% w/w) was added, based on the total weight of the mixture,. The solution was stirred at a speed of 600 revolutions/min for 35 minutes, to obtain an interface modifier.

Silicon dioxide aerogel with a porosity greater than 60% was used as the base for the aerogel composite. 60 parts by weight of the silicon dioxide aerogel, 20 parts by weight of CF/CNT-bentonite complex, 11 parts by weight of phenolic resin adhesive, 3 parts by weight of interface modifier, and 65 parts by weight of ethanol solvent were mixed, based on the total weight of the mixture, then press moulded at a moulding pressure of 1-2 MPa for 20-30 minutes, and thereafter, dried at 55-65 °C for 2-3 hours, to obtain the aerogel composite.

### Experimental Example 1

The parameters used in Experimental Example 1 were different from Example 3 in that the nano MgO stabiliser was prepared by thermally calcination in a single-step program.

15 parts by weight of carbon nanotubes (CNT) were first added to 40 parts by weight of HCl solution (7.5% w/w), based on the total weight of the mixture, and dispersed evenly. Thereafter, 4 parts by weight of chitosan and 0.4 parts by weight of CTAB were added, based on the total weight of the mixture, and the solution stirred at a speed of 325 revolutions/min for 25 minutes to obtain a CNT solution. Carbon fiber (CF) was added to the CNT solution in a weight ratio of 1:5, stirred at a speed of 400-500 revolutions/min and temperature of 70 °C, for 50 minutes. The mixture was then washed with water, then dried, to obtain a CF/CNT hybrid.

Bentonite was heat-treated at 220 °C for 45 min, and cooled at a rate of 2 °C/s to room temperature. The heat-treated bentonite and CF/CNT hybrid were mixed in a weight ratio of 2:5, and sodium alginate (12.5% w/w) was added in an amount of 5-9 times of the CF/CNT hybrid, based on the total weight of the mixture,. The mixture was ultrasonicated at 700 W for 25 minutes, then washed with water, then dried, to obtain CF/CNT-bentonite complex.

7.5 parts by weight of silane coupling agent KH570 was added to 12.5 parts by weight of ethanol solvent, based on the total weight of the mixture, and dispersed evenly. Thereafter, 2 parts by weight of lanthanum chloride solution (4.5% w/w) was added, based on the total weight of the mixture. The solution was stirred at a speed of 600 revolutions/min for 35 minutes, to obtain an interface modifier.

Nano magnesium oxide (MgO) was thermally calcined in a single-step program, at 420 °C for 1.5 hours, and thereafter cooled to room temperature with water. The calcined nano MgO was sonicated in deionized water at 400 W for 15 minutes. The amount of deionised water used was 7 times the amount of nano MgO by weight. Subsequently, the dispersion was filtered and dried to obtain a nano MgO stabiliser.

Silicon dioxide aerogel with a porosity greater than 60% was used as the base for the aerogel composite. 60 parts by weight of the silicon dioxide aerogel, 20 parts by weight of CF/CNT-bentonite complex, 11 parts by weight of phenolic resin adhesive, 3 parts by weight of interface modifier, 2.5 parts by weight of nano MgO, and 65 parts by weight of ethanol solvent were mixed, based on the total weight of the mixture, then press moulded at a moulding pressure of 1-2 MPa for 20-30 minutes, and thereafter, dried at 55-65 °C for 2-3 hours, to obtain the aerogel composite.

### Experimental Example 2

The parameters used in Experimental Example 2 were different from Example 3 in that the nano MgO stabiliser was prepared using different thermal calcination conditions.

15 parts by weight of carbon nanotubes (CNT) were first added to 40 parts by weight of HCl solution (7.5% w/w), based on the total weight of the mixture, and dispersed evenly. Thereafter, 4 parts by weight of chitosan and 0.4 parts by weight of CTAB were added, based on the total weight of the mixture, and the solution stirred at a speed of 325 revolutions/min for 25 minutes to obtain a CNT solution. Carbon fiber (CF) was added to the CNT solution in a weight ratio of 1:5, stirred at a speed of 400-500 revolutions/min and temperature of 70 °C, for 50 minutes. The mixture was then washed with water, then dried, to obtain a CF/CNT hybrid.

Bentonite was heat-treated at 220 °C for 45 min, and cooled at a rate of 2 °C/s to room temperature. The heat-treated bentonite and CF/CNT hybrid were mixed in a weight ratio of 2:5, and sodium alginate (12.5% w/w) was added in an amount of 5-9 times of the CF/CNT hybrid, based on the total weight of the mixture. The mixture was ultrasonicated at 700 W for 25 minutes, then washed with water, then dried, to obtain CF/CNT-bentonite complex.

7.5 parts by weight of silane coupling agent KH570 was added to 12.5 parts by weight of ethanol solvent, based on the total weight of the mixture, and dispersed evenly. Thereafter, 2 parts by weight of lanthanum chloride solution (4.5% w/w) was added, based on the total weight of the mixture. The solution was stirred at a speed of 600 revolutions/min for 35 minutes, to obtain an interface modifier.

Nano magnesium oxide (MgO) was thermally calcined in a three-step program: (i) at 350 °C for 1 hour, (ii) thereafter the temperature was increased to 400 °C at a rate of 2 °C / s, and maintained for 15 minutes, and (iii) the temperature was decreased to 215 °C at a rate of 1 °C / s, and maintained for 5 minutes, before cooling to room temperature with water. The calcined nano MgO was sonicated in deionized water at 400 W for 15 minutes. The amount of deionised water used was 7 times the amount of nano MgO by weight. Subsequently, the dispersion was filtered and dried to obtain a nano MgO stabiliser.

Silicon dioxide aerogel with a porosity greater than 60% was used as the base for the aerogel composite. 60 parts by weight of the silicon dioxide aerogel, 20 parts by weight of CF/CNT-bentonite complex, 11 parts by weight of phenolic resin adhesive, 3 parts by weight of interface modifier, 2.5 parts by weight of nano MgO, and 65 parts by weight of ethanol solvent were mixed, based on the total weight of the mixture, then press moulded at a moulding pressure of 1-2 MPa for 20-30 minutes, and thereafter, dried at 55-65 °C for 2-3 hours, to obtain the aerogel composite.

### Experimental Example 3

The parameters used in Experimental Example 3 were different from Example 3 in that the nano MgO stabiliser was prepared without ultrasonication of the calcined nano MgO.

15 parts by weight of carbon nanotubes (CNT) were first added to 40 parts by weight of HCl solution (7.5% w/w), based on the total weight of the mixture, and dispersed evenly. Thereafter, 4 parts by weight of chitosan and 0.4 parts by weight of CTAB were added, based on the total weight of the mixture, and the solution stirred at a speed of 325 revolutions/min for 25 minutes to obtain a CNT solution. Carbon fiber (CF) was added to the CNT solution in a weight ratio of 1:5, stirred at a speed of 400-500 revolutions/min and temperature of 70 °C, for 50 minutes. The mixture was then washed with water, then dried, to obtain a CF/CNT hybrid.

Bentonite was heat-treated at 220 °C for 45 min, and cooled at a rate of 2 °C/s to room temperature. The heat-treated bentonite and CF/CNT hybrid were mixed in a weight ratio of 2:5, and sodium alginate (12.5% w/w) was added in an amount of 5-9 times of the CF/CNT hybrid, based on the total weight of the mixture. The mixture was ultrasonicated at 700 W for 25 minutes, then washed with water, then dried, to obtain CF/CNT-bentonite complex.

7.5 parts by weight of silane coupling agent KH570 was added to 12.5 parts by weight of ethanol solvent, based on the total weight of the mixture, and dispersed evenly. Thereafter, 2 parts by weight of lanthanum chloride solution (4.5% w/w) was added, based on the total weight of the mixture. The solution was stirred at a speed of 600 revolutions/min for 35 minutes, to obtain an interface modifier.

Nano magnesium oxide (MgO) stabiliser was obtained by thermally calcining in a three-step program: (i) at 420 °C for 1.5 hours, (ii) thereafter the temperature was increased to 525 °C at a rate of 4.5 °C / s, and maintained for 35 minutes, and (iii) the temperature was decreased to 325 °C at a rate of 3.5 °C / s, and maintained for 15 minutes, before cooling to room temperature with water.

Silicon dioxide aerogel with a porosity greater than 60% was used as the base for the aerogel composite. 60 parts by weight of the silicon dioxide aerogel, 20 parts by weight of CF/CNT-bentonite complex, 11 parts by weight of phenolic resin adhesive, 3 parts by weight of interface modifier, 2.5 parts by weight of nano MgO, and 65 parts by weight of ethanol solvent were mixed, based on the total weight of the mixture, then press moulded at a moulding pressure of 1-2 MPa for 20-30 minutes, and thereafter, dried at 55-65 °C for 2-3 hours, to obtain the aerogel composite.

### Results

The aerogel composites obtained in Examples 1-3, Comparative Examples 1-8, and Experimental Examples 1-3 were measured for their performance in terms of thermal conductivity, flexural strength, and tensile strength at 50% deformation. The results obtained are as shown in Table 1.

**Table 1: Performance of aerogel composites**

| | **Thermal conductivity (W/mK)** | **Flexural strength (MPa)** | **Tensile strength at 50% elongation (MPa)** |
|---|---|---|---|
| **Example 1** | 0.0107 | 3.05 | 1.28 |
| **Example 2** | 0.0103 | 3.12 | 1.35 |
| **Example 3** | 0.0101 | 3.21 | 1.42 |
| **Comparative Example 1** | 0.0215 | 2.15 | 0.54 |
| **Comparative Example 2** | 0.0272 | 2.65 | 0.25 |
| **Comparative Example 3** | 0.0187 | 2.45 | 0.67 |
| **Comparative Example 4** | 0.0211 | 2.21 | 0.59 |
| **Comparative Example 5** | 0.0202 | 2.32 | 0.64 |
| **Comparative Example 6** | 0.0176 | 2.51 | 0.72 |
| **Comparative Example 7** | 0.0245 | 2.02 | 0.61 |
| **Comparative Example 8** | 0.0245 | 2.36 | 0.68 |
| **Experimental Example 1** | 0.0231 | 2.48 | 0.77 |
| **Experimental Example 2** | 0.0198 | 2.96 | 1.18 |
| **Experimental Example 3** | 0.0205 | 2.79 | 1.07 |

As seen from Table 1, the thermal conductivity of the aerogel composite of Example 3 was as low as 0.0101 W/mK, and tensile strength under 50% elongation was 1.42MPa.

From Comparative Example 1, it can be seen that without the addition of CF/CNT-bentonite complex, the thermal insulation, flexural strength and tensile strength under elongation of the composite were significantly reduced. From Comparative Example 2, when CNT was replaced by carbon fiber, the improvement in thermal conductivity of the composite was not as significant compared with the improvement when using CNT, and the tensile strength under 50% elongation was also significantly reduced.

From Comparative Examples 3-6, it can be seen that when the carbon nanotubes were not dispersed in a solution of HCl, chitosan, and CTAB, or when the carbon nanotubes were replaced by graphene, or when the preparation method of the CF/CNT-bentonite complex, or when the carbon nanotubes were dispersed in a solution of only HCl and ethanol, the thermal insulation and mechanical properties of the composite were less improved compared to the composites prepared by the method of the present embodiments.

From Comparative Examples 7-8, it can be seen that without addition of the interface modifier or nano MgO, the thermal insulation and strength performance of the resulting composites are poorer. The use of interface modifier and/or nano MgO can be combined with CF/CNT-bentonite complex for a synergistic effect, which enhances the thermal insulation and strength performance of the composites.

From Experimental Examples 1-3, it can be seen that when the preparation of nano MgO was not performed using subsequent step-by-step calcination in a 3-step program, the thermal insulation and strength performance of the resulting composites is less ideal. Further, with different calcination parameters and without ultrasonic dispersion, the performance of the composites is less ideal compared to the composites formed from the method of the embodiments of Examples 1-3.

The composites derived from Examples 1-3 were further tested for their performance in terms of thermal conductivity, flexural strength, and tensile strength at 50% deformation after being placed in hydrochloric acid solution (5% w/w) for 24 hours. The results are as shown in Table 2.

**Table 2: Performance of aerogel composites after 24 hours in HCl solution**

| | **Thermal conductivity (W/mK)** | **Flexural strength (MPa)** | **Tensile strength at 50% elongation (MPa)** |
|---|---|---|---|
| **Example 1** | 0.0112 | 3.02 | 1.25 |
| **Example 2** | 0.0106 | 3.06 | 1.32 |
| **Example 3** | 0.0105 | 3.19 | 1.39 |

As seen from Table 2, when the composites were placed in an acid environment, the thermal insulation and mechanical strength does not decrease significantly, indicating excellent acid resistance.

In contrast, when the composite of Comparative Example 8 was subject to the same acid treatment, the thermal conductivity, flexural strength, and tensile strength at 50% deformation was measured to be 0.0352 W/mK, 1.05 MPa, and 0.25 MPa, respectively, which indicated significant deterioration of the composite, and poor acid resistance.

Advantageously and surprisingly, addition of nano MgO further improves the thermal insulation, mechanical properties, and performance stability of the composites.

Whilst the foregoing description has described exemplary embodiments, it will be understood by those skilled in the technology concerned that many variations may be made without departing from the present invention.

## Claims

1. An aerogel composite comprising:
- an aerogel; and
- a complex comprising carbon fibers (CF), carbon nanotubes (CNT), and a swelling clay.

2. The aerogel composite according to claim 1, further comprising a nano-stabiliser.

3. The aerogel composite according to claim 1 or 2, wherein the composite comprises 50-70 parts of the aerogel by weight, and/or 15-25 parts of the complex by weight.

4. The aerogel composite according to claim 2 or 3, wherein the composite comprises 1-4 parts of the nano-stabiliser by weight.

5. The aerogel composite according to any preceding claim, wherein the CF and CNT forms a CF/CNT hybrid.

6. The aerogel composite according to any preceding claim, wherein the composite has a thermal conductivity of 0.01-0.03 W/mK, and/or a flexural strength of ≥ 0.25 MPa, and/or a tensile strength of ≥ 1.20 MPa at 50% elongation.

7. A method of forming the aerogel composite according to any preceding claim, the method comprising:
(a) mixing an aerogel with a complex comprising carbon fibers (CF), carbon nanotubes (CNT), and a swelling clay in a solvent; and
(b) drying to form the aerogel composite.

8. The method according to claim 7, wherein the method further comprises forming the complex prior to the mixing.

9. The method according to claim 8, wherein the forming the complex comprises:
- mixing CNT in a solution comprising an acid and a surfactant with CF;
- drying to form the CF/CNT hybrid;
- mixing the CF/CNT hybrid with the swelling clay in a solution comprising a dispersing agent; and
- drying to form the complex.

10. The method according to any of claims 7-9, further comprising heat treating the swelling clay prior to the mixing in (a).

11. The method according to any of claims 7-10, wherein the mixing in (a) further comprises mixing a nano-stabiliser.

12. The method according to claim 11, wherein the method further comprises calcinating the nano-stabliser prior to the mixing a nano-stabliser.

13. The method according to claim 12, wherein the calcinating comprises sequentially calcinating at a first predetermined temperature for a first predetermined time, followed by a second predetermined temperature for a second predetermined time, followed by a third predetermined temperature for a third predetermined time.

14. The method according to claim 12 or 13, wherein the method further comprises ultrasonicating the nano-stabliser following the calcinating and prior to the mixing the nano-stabliser.

15. The method according to any of claims 7-14, wherein the mixing in (a) further comprises mixing an interface modifier.
